# FASCICULE DE BREVET EUROPEEN

(11) **EP 1 385 762 B1**
(45) Date de publication et mention de la délivrance du brevet: **19.03.2008**
(21) Numéro de dépôt: 02730390.8
(22) Date de dépôt: 03.05.2002
(51) Int. Cl.: B65G 47/84, B65G 29/00

(54) **PINCE DE PREHENSION DE RECIPIENTS**
GREIFER FÜR BEHÄLTER
CONTAINER GRIPPING CLAMP

(30) Priorité: 09.05.2001 FR 0106108; 18.09.2001 FR 0112042
(43) Date de publication de la demande: 04.02.2004
(73) Titulaire: S.E.R.A.C. GROUP, 72400 La Ferte-Bernard (FR)
(72) Inventeur: GRAFFIN, André, 50490 Kuala Lumpur (MY)
(74) Mandataire: Lavialle, Bruno François Stéphane
(86) Numéro de dépôt international: PCT/FR2002/001531
(87) Numéro de publication internationale: WO 2002/090220

(56) Documents cités:
- EP-A- 0 451 670
- EP-A- 0 480 585
- FR-A- 2 785 271
- US-A- 4 591 046

## Description

La présente invention concerne une pince de préhension de récipients ayant un goulot pourvu d'une collerette en saillie. Les dispositifs de ce type sont par exemple utilisables dans des appareils de transport de récipients, tels que des étoiles de transport, employés notamment dans les installations de remplissage de ces récipients.

Une étoile est généralement constituée d'une plate-forme rotative comportant une portion périphérique dans laquelle sont ménagées des échancrures, également dénommées alvéoles. Chaque échancrure débouche latéralement pour recevoir une partie du goulot de telle manière que la collerette repose sur une partie de la surface supérieure de la plate-forme adjacente au bord de l'échancrure. Le maintien des goulots dans les échancrures est assuré par un rail qui s'étend autour de la plate-forme pour empêcher que les goulots quittent les échancrures. Il existe cependant un risque qu'un récipient se coince entre le rail et la plate-forme et provoque un bourrage. Le rail doit alors être démonté pour permettre le retrait des récipients coincés. Cette intervention est relativement longue et suppose l'arrêt préalable de l'installation. De plus, un inconvénient supplémentaire de ces étoiles réside dans le fait que, à cadence élevée, la force centrifuge qui s'exerce sur les récipients tend à incliner ceux-ci risquant alors de provoquer des incidents, tels que les bourrages précités, lors du transfert des récipients d'une étoile à une autre.

Dans un autre type d'étoile de transport, la plate-forme rotative est équipée en périphérie de pinces comportant deux mâchoires qui sont reliées l'une à l'autre par un axe d'articulation parallèle à l'axe de rotation de la plate-forme et qui sont agencées pour saisir le récipient par le goulot soit au-dessus soit en dessous de la collerette. Cette solution obvie aux inconvénients précités mais est complexe et d'un coût relativement élevé.

Un dispositif de préhension de goulot de récipients est par exemple décrit dans le document FR-A-2 785 271.

Dans un domaine technique différent, à savoir le transport de circuits imprimés, il est connu d'utiliser des pinces à mâchoire mobile verticalement comme celle décrite dans le document EP-A-480 585.

Un but de l'invention est de permettre de manière simple et relativement peu coûteuse la préhension de récipients comprenant un corps et un goulot ayant une collerette en saillie présentant une face d'appui sensiblement radiale du côté du corps.

En vue de la réalisation de ce but, on prévoit, selon l'invention telle que définie dans la revendication 1, une pince de préhension de tels récipients, comportant une première mâchoire et une deuxième mâchoire, la première mâchoire étant agencée pour coopérer avec la face d'appui de la collerette et la deuxième mâchoire étant agencée pour coopérer avec une zone du goulot s'étendant au voisinage de la face d'appui du côté de celle-ci opposé au corps lorsque la pince est dans une position fermée de préhension.

Ainsi, le maintien du récipient est assuré par la première mâchoire qui agit sur la surface d'appui de la collerette et la deuxième mâchoire qui agit sur la partie du goulot au-dessus de la face d'appui. La pince peut avoir une structure simple et, lorsque la pince de préhension est montée sur une plate-forme, il n'est pas nécessaire de recourir à un rail externe pour maintenir les récipients sur la plate-forme. De plus, avec cette structure, il est possible de réaliser simplement des transferts de récipients entre deux plates-formes.

La première mâchoire comprend une butée de collerette solidaire d'une armature et la deuxième mâchoire comprend un élément de maintien monté mobile par rapport à l'armature pour exercer une pression sur le goulot de manière à maintenir la collerette en position contre la butée.

La pince comprend un organe support ayant une face sensiblement horizontale formant la butée, l'organe support comprenant de préférence une échancrure débouchant latéralement pour recevoir une portion du goulot adjacente à la collerette.

La butée présente alors une surface relativement grande pour coopérer avec la surface d'appui de la collerette et le bord de l'échancrure peut en outre assurer un positionnement latéral du goulot.

L'élément de maintien est monté par rapport à l'armature pour pivoter autour d'un axe d'articulation sensiblement perpendiculaire à la face de butée et comporte une extrémité adjacente à l'échancrure pour prendre appui latéralement sur la collerette de manière à maintenir le goulot dans l'échancrure.

L'élément de maintien permet alors de maintenir le goulot dans l'échancrure et la surface d'appui de la collerette sur la face de butée sans encombrer la zone s'étendant au-dessus de la collerette. Cette structure est particulièrement intéressante pour une utilisation sur une plate-forme de vissage de bouchons car la pince de préhension peut alors être agencée pour ne pas interférer avec les mouvements de la broche de vissage. En outre, les dimensions de la collerette étant communes à plusieurs tailles de récipients, le maintien par la collerette présente l'avantage de permettre la préhension de récipients de tailles différentes sans modification de la pince.

Avantageusement, l'élément de maintien comporte au moins une dent agencée pour mordre la collerette.

L'élément de maintien assure alors un agrippement ferme de la collerette.

Selon une autre caractéristique avantageuse, la pince comprend un organe d'appui latéral d'une portion du goulot, l'organe d'appui étant espacé de la butée.

L'invention concerne aussi un appareil de transport tel que défini dans la revendication 5.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique partielle de dessus d'une installation de remplissage comportant des pinces de préhension conformes à un premier mode de réalisation de l'invention,
- la figure 2 est une vue en perspective avec écorché d'un de ces pinces de préhension,
- la figure 3 est une vue partielle en coupe selon la ligne III-III de la figure 1 de la pince de préhension en position fermée de maintien d'un récipient,
- la figure 4 est une vue analogue à la figure 3 de la pince de préhension en position ouverte de libération du récipient,
- la figure 5 est une vue schématique partielle de dessus d'une installation de remplissage pourvue de pinces de préhension selon un deuxième mode de réalisation de l'invention,
- la figure 6 est une vue en perspective d'une de ces pinces de préhension,
- la figure 7 est une vue schématique partielle de dessus d'une installation de remplissage pourvue de pinces de préhension selon un troisième mode de réalisation de l'invention,
- la figure 8 est une vue en perspective d'un de ces pinces de préhension.

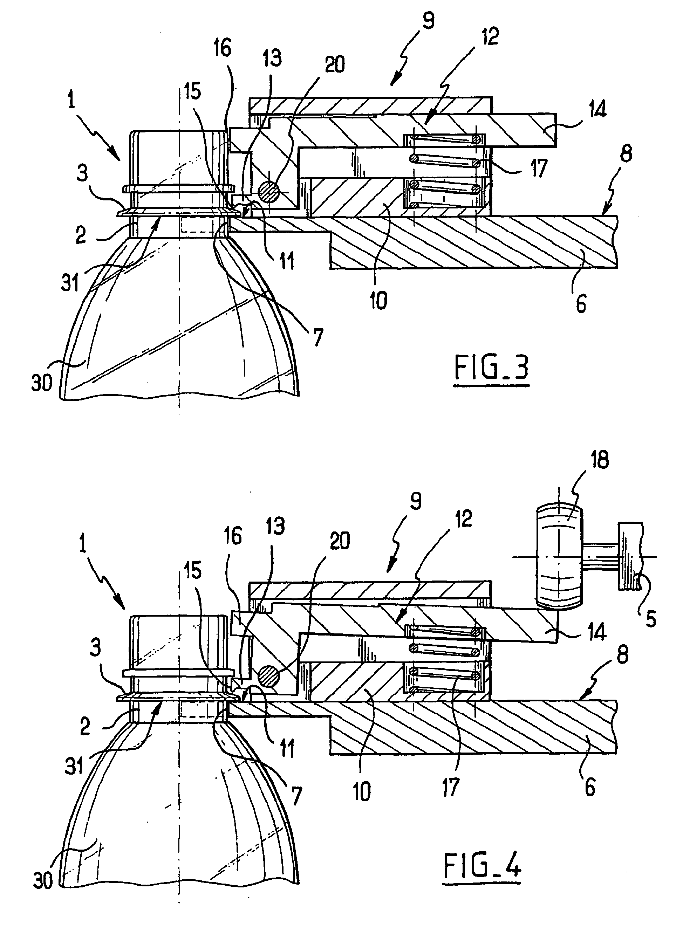

La pince de préhension conforme à l'invention est destinée à être utilisée avec des récipients généralement désignés en 1 comportant un corps 30 et un goulot 2 ayant une collerette 3 en saillie. La collerette 3 présente du côté du corps 30 une face d'appui 31 sensiblement radiale (visible sur les figures 3 et 4).

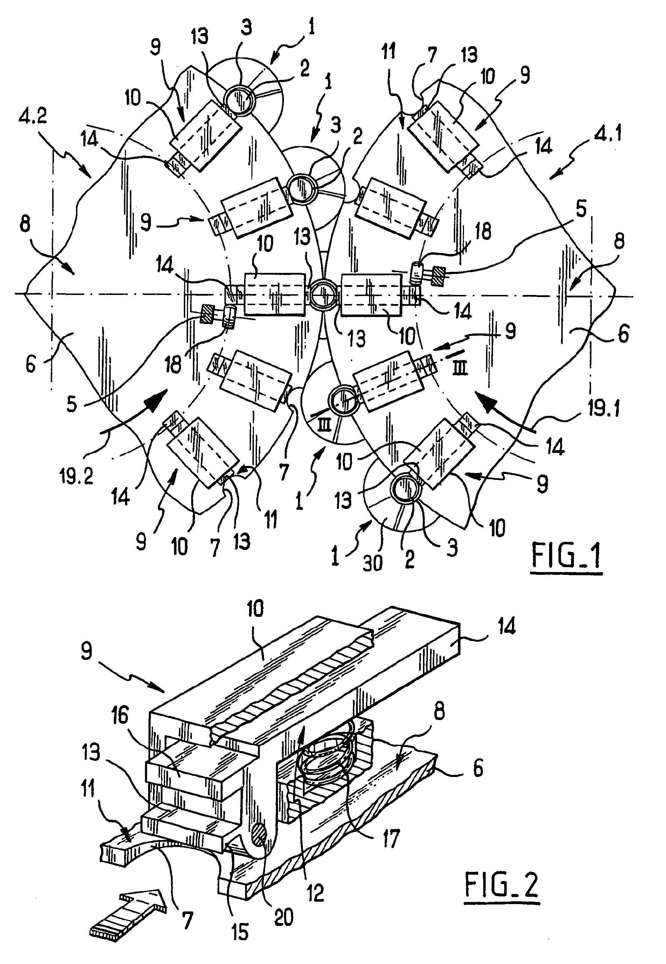

En référence aux figures, les pinces de préhension conformes aux trois modes de réalisation de l'invention sont ici décrites dans une application à une installation de remplissage qui comporte deux plates-formes 4, à savoir une plate-forme amont et une plate-forme aval respectivement désignées 4.1 et 4.2 pour les distinguer, qui sont tangentes l'une à l'autre et sont montées pour pivoter par rapport à un bâti 5 (visible sur les figures 1 et 4) selon des sens de rotation opposés indiqués sur les figures 1, 5 et 7 par les flèches référencées 19.1 et 19.2 respectivement.

Chaque plate-forme 4 comprend une plaque 6 horizontale en forme de disque qui comporte en périphérie des échancrures 7 débouchant latéralement. Chaque échancrure 7 a une forme semi-circulaire de rayon supérieur au rayon du goulot 2 et inférieur au rayon de la collerette 3.

La plaque 6 comporte une surface supérieure 8 sur une portion périphérique de laquelle sont montés des pinces de préhension disposées à proximité de chaque échancrure 7.

Selon le premier mode de réalisation et en référence aux figures 1 à 4, chaque pince de préhension généralement désignée en 9 comporte une armature 10 fixée sur la surface supérieure 8 de la plaque 6, une butée 11 solidaire de l'armature 10 et un élément de maintien généralement désigné en 12 monté mobile sur l'armature 10.

La butée 11 est ici formée par la partie de la surface supérieure 8 de la plaque 6 qui est adjacente à l'échancrure 7 correspondante.

L'élément de maintien 12 est une mâchoire qui comporte une extrémité formant un mors 13 s'étendant en regard de la butée 11 et une extrémité opposée formant une portion d'actionnement 14. Le mors 13 comporte une dent 15 en saillie vers la butée 11. La dent 15 est ici formée d'une arête aiguë.

L'élément de maintien 12 comprend en outre un organe d'appui latéral 16 disposé au-dessus du mors 13 et espacé de la butée 11.

L'élément de maintien 12 est monté sur l'armature 10 au moyen d'un axe d'articulation 20 horizontal disposé entre les extrémités de l'élément de maintien 12 pour pivoter entre une position ouverte (représentée à la figure 4) dans laquelle la dent 15 est écartée de la butée 11 d'une distance supérieure à l'épaisseur de la collerette 3 et une position fermée (représentée à la figure 3) dans laquelle la dent 15 est rapprochée de la butée 11 pour s'étendre à une distance inférieure à l'épaisseur de la collerette 3. Un ressort 17 est intercalé entre l'armature 10 et l'élément de maintien 12 pour rappeler celui-ci dans sa position fermée.

L'installation de remplissage comprend également des galets 18 montés fixes sur le bâti 5 au-dessus de chaque plate-forme 4 sur le trajet des parties d'actionnement 14 des éléments de maintien 12 pour provoquer, lors de la rotation des plates-formes, le pivotement des éléments de maintien 12 vers leur position ouverte à l'encontre de l'effort exercé par le ressort 17.

Le galet d'actionnement 18 de la plate-forme aval 4.2 est disposé en amont du point de tangence des plates-formes 4 tandis que le galet d'actionnement 18 de la plate-forme amont 4.1 est disposé en aval de ce point de tangence par rapport aux sens de rotation respectifs de ces plates-formes.

Le transfert d'un récipient 1 de la plate-forme amont 4.1 vers la plate-forme aval 4.2 va maintenant être décrit.

Le goulot 2 du récipient 1 est reçu dans une échancrure 7 de la plate-forme amont 4.1 et la surface d'appui 31 de la collerette 3 est maintenue appliquée contre la butée 11 par l'élément de maintien 12 qui est forcé vers sa position fermée par le ressort 17. La collerette 3 est ainsi pincée entre la butée 11 et le mors 13 dont la dent 15 est enfoncée dans la collerette 3. La partie du goulot 2 s'étendant au-dessus de la collerette 3 est alors en appui contre l'organe d'appui latéral 16 qui s'oppose à l'effet de la force centrifuge exercée sur le récipient 1 du fait du mouvement de rotation qui lui est imprimé par la plate-forme 4.1. L'inclinaison du récipient provoquée par la force centrifuge est ainsi limitée.

Les mouvements de rotation des plates-formes 4 sont synchronisés de telle manière que l'échancrure 7 de la plate-forme amont 4.1 qui reçoit le récipient 1 arrive en regard d'une échancrure 7 correspondante vide de la plate-forme aval 4.2 au niveau du point de tangence des plates-formes 4.

Au cours de ce mouvement de rotation, au niveau de la plate-forme aval 4.2, la partie d'actionnement 14 de la pince de préhension 9 adjacent à l'échancrure 7 vide qui arrive au point de tangence rencontre le galet d'actionnement 18. Ce galet d'actionnement 18 amène alors l'élément de maintien 12 dans sa position ouverte pour permettre l'introduction de la collerette 3 du récipient, 1 porté par la plate-forme amont 4.1 entre la butée 11 et le mors 13 de cet élément de maintien 12. Lorsque le galet d'actionnement 18 quitte la partie d'actionnement 14, le ressort 17 ramène l'élément de maintien 12 vers sa position fermée. Le récipient 1 est alors maintenu dans la pince de préhension 9 de la plate-forme aval 4.2 : l'élément de maintien 12 applique la collerette 3 contre la butée 11 et la dent 15 mord la collerette 3.

Au point de tangence, le goulot 2 du récipient 1 est reçu dans les deux échancrures 7 en regard et la collerette 3 du récipient 1 est pincée par les pinces de préhension 9 en regard.

En aval du point de tangence, au niveau de la plate-forme amont 4.1, la partie d'actionnement 14 de l'élément de maintien 12 de la pince de préhension 9 rencontre le galet d'actionnement 18 qui amène l'élément de maintien 12 dans sa position ouverte et libère la collerette 3.

La rotation se poursuivant, le récipient 1 quitte la plate-forme amont 4.1 et n'est plus alors supporté que par la plate-forme aval 4.2.

Il est ainsi mis en oeuvre un procédé de transport de récipients qui comprend une étape de préhension d'un récipient associée à une étape de déplacement de ce récipient, la préhension étant réalisée par pincement de la collerette. La collerette est alors utilisée à la fois pour le maintien vertical des emballages et le maintien radial de ceux-ci dans le plan de transport. Ce mode de préhension est particulièrement simple. En outre, pour transférer le récipient de la plate-forme amont vers la plate-forme aval, le pincement est réalisé en deux points opposés de la collerette, ce qui permet de simplifier l'installation.

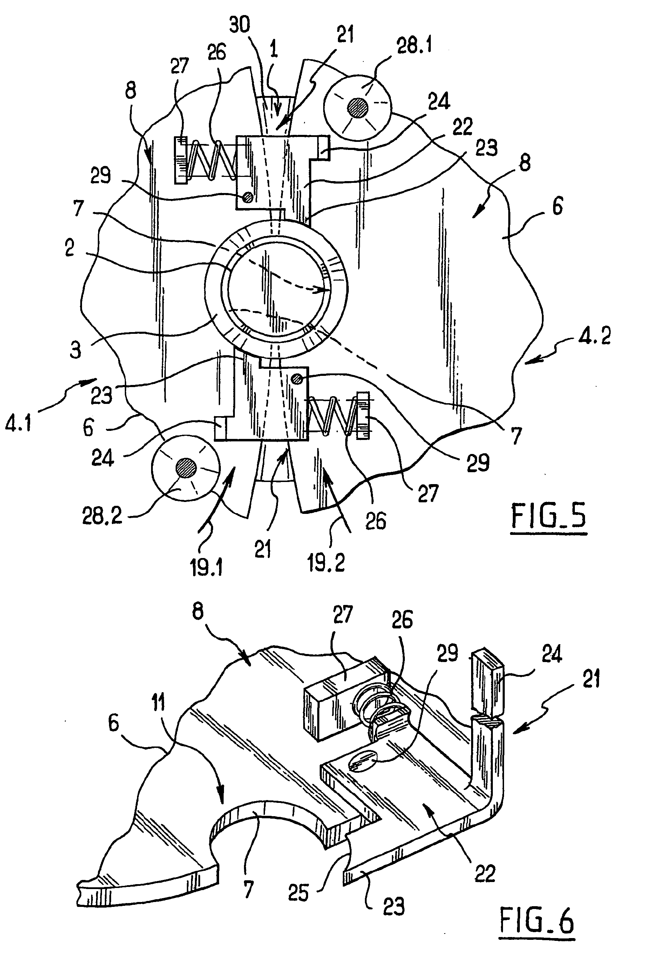

Selon le deuxième mode de réalisation et en référence aux figures 5 et 6, chaque pince de préhension généralement désignée en 21 comprend une butée 11 formée comme précédemment par une portion de la surface supérieure 8 de la plaque 6 adjacente à l'échancrure 7 et un élément de maintien 22 monté sur la surface supérieure 8 de la plaque 6 (qui forme alors l'armature de la pince de préhension) à proximité de l'échancrure 7 par l'intermédiaire d'un axe d'articulation 29 perpendiculaire à cette surface pour pivoter entre une position ouverte et une position fermée.

L'élément de maintien 22 comprend une partie en saillie de la plate-forme 4 qui possède un mors 23 et à l'opposé un montant d'actionnement 24 sensiblement perpendiculaire à la plaque 6.

Le mors 23 possède une face 25 concave en arc de cercle de rayon égal à celui de la collerette 3.

Un ressort 26 est monté entre l'élément de maintien 22 à l'opposé du mors 23 et une butée 27 en saillie de la plaque 6 pour rappeler élastiquement l'élément de maintien 22 dans sa position fermée.

Les pinces de préhension 21 sont montées en aval de l'échancrure 7 sur la plate-forme amont 4.1 et en amont de l'échancrure 7 sur la plate-forme aval 4.2 par référence aux sens de rotation respectifs de celles-ci.

L'installation de remplissage comprend également des galets 28.1 et 28.2 montés fixes sur le bâti respectivement au-dessus des plates-formes 4.2 et 4.1 sur le trajet des montants d'actionnement 24 des éléments de maintien 22 pour provoquer, lors de la rotation des plates-formes, le pivotement des éléments de maintien 22 vers leur position ouverte à l'encontre de l'effort exercé par le ressort 26.

Le galet d'actionnement 28.2 de la plate-forme aval 4.2 est ainsi disposé au-dessus de la plate-forme amont 4.1 en amont du point de tangence des plates-formes 4 tandis que le galet d'actionnement 28.1 de la plate-forme amont 4.1 est disposé au-dessus de la plate-forme aval 4.2 en aval de ce point de tangence par rapport aux sens de rotation respectifs de ces plates-formes.

Le transfert d'un récipient 1 de la plate-forme amont 4.1 vers la plate-forme aval 4.2 va maintenant être décrit.

Le goulot 2 du récipient 1 est reçu dans une échancrure 7 de la plate-forme amont 4.1 et la surface d'appui 31 de la collerette 3 repose sur la butée 11. L'élément de maintien 22 qui est forcé vers sa position fermée par le ressort 26 exerce sur la collerette 3, par l'intermédiaire de la face 25 du mors 23, un effort en direction d'une portion opposée du bord de l'échancrure 7. Il est ainsi appliqué une pression latérale sur la collerette qui tend à maintenir le goulot 2 en appui contre le bord de l'échancrure 7 et par là-même à maintenir la face d'appui 31 de la collerette 3 en position sur la butée 11.

Les mouvements de rotation des plates-formes 4 sont synchronisés de telle manière que l'échancrure 7 de la plate-forme amont 4.1 qui reçoit le récipient 1 arrive en regard d'une échancrure 7 correspondante vide de la plate-forme aval 4.2 au niveau du point de tangence des plates-formes 4.

Au cours de ce mouvement de rotation, au niveau de la pince de préhension 21 correspondante de la plate-forme aval 4.2, le montant d'actionnement 24 de la pince de préhension 21 adjacent à l'échancrure 7 vide qui arrive au point de tangence rencontre le galet d'actionnement 28.2. Le galet d'actionnement 28.2 amène alors l'élément de maintien 22 dans sa position ouverte dans laquelle le mors 23 est écarté du bord de l'échancrure 7 d'une distance suffisante pour permettre l'introduction de la collerette 3 du récipient 1 porté par la plate-forme amont 4.1. Lorsque le galet d'actionnement 28.2 quitte le montant d'actionnement 24, le ressort 26 ramène l'élément de maintien 22 vers sa position fermée. Le récipient 1 est alors maintenu dans la pince de préhension 21 de la plate-forme aval 4.2 par l'élément de maintien 22 en position fermée.

Au point de tangence, le goulot 2 du récipient 1 est reçu dans les deux échancrures 7 en regard et la collerette 3 du récipient 1 est pincée par les pinces de préhension 21 en regard. On remarquera que les éléments de maintien 22 étant en appui pour l'un sur la partie aval de la collerette et pour l'autre sur la partie amont de celle-ci, les éléments de maintien 22 peuvent s'étendre au-dessus de la plate-forme en regard de celle sur laquelle ils sont montés sans interférer l'un avec l'autre.

En aval du point de tangence, au niveau de la pince de préhension 21 de la plate-forme amont 4.1, la partie d'actionnement 24 de l'élément de maintien 22 de cette pince de préhension 21 rencontre le galet d'actionnement 28.1 qui amène l'élément de maintien 22 dans sa position ouverte et libère la collerette 3.

La rotation se poursuivant, le récipient 1 quitte la plate-forme amont 4.1 et n'est plus alors supporté que par la plate-forme aval 4.2. Le galet 28.1 quittant le montant d'actionnement 24, le ressort 26 ramène l'élément de maintien 22 dans sa position fermée.

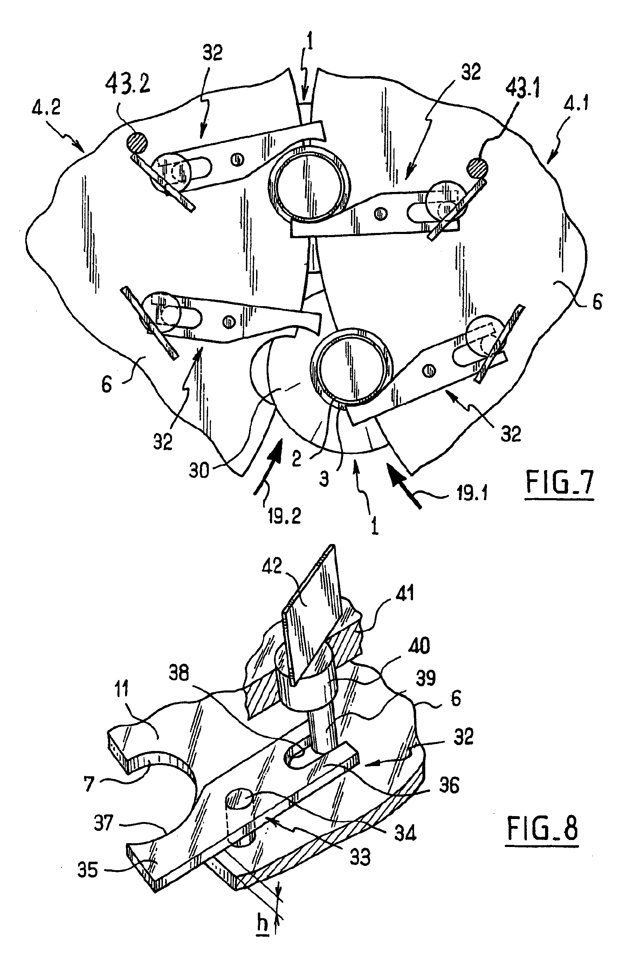

Selon le troisième mode de réalisation et en référence aux figures 7 et 8, chaque pince de préhension généralement désignée en 32 comprend une butée 11 formée comme précédemment par une portion de la surface supérieure 8 de la plaque 6 adjacente à l'échancrure 7 et un élément de maintien 33 monté sur la surface supérieure 8 de la plaque 6 (qui forme alors l'armature de la pince de préhension) à proximité de l'échancrure 7 par l'intermédiaire d'un axe d'articulation 34 perpendiculaire à cette surface pour pivoter entre une position ouverte (visible à la figure 7 sur les pinces 32 solidaires de la plate-forme 4.2) et une position fermée (visible à la figure 7 sur les pinces 32 solidaires de la plate-forme 4.1).

L'élément de maintien 33 comprend une partie en saillie de la plate-forme 4 qui possède un mors 35 et à l'opposé une partie d'actionnement 36.

Le mors 35 est situé par rapport à la butée 11 à une hauteur h supérieure à l'épaisseur de la collerette 3 et possède une face 37 concave en arc de cercle de rayon égal à celui de la portion du goulot 2 s'étendant immédiatement au-dessus de la collerette 3.

La partie d'actionnement 36 comporte une rainure oblongue 38 recevant à coulissement le long de ses bords un doigt 39 solidaire de façon excentrée d'un tourillon 40 monté pour pivoter autour d'un axe sensiblement vertical dans un support 41 fixé sur la plaque 6. Une plaquette 42 verticale est elle-même montée de façon excentrée sur le tourillon 40 à l'opposé du doigt 39.

Les pinces de préhension 32 sont montées en amont de l'échancrure 7 sur la plate-forme amont 4.1 et en aval de l'échancrure 7 sur la plate-forme aval 4.2 par référence aux sens de rotation 19.1 et 19.2 respectifs de celles-ci.

L'installation de remplissage comprend également des galets d'actionnement 43 montés fixes sur le bâti respectivement au-dessus des plates-formes 4.1 et 4.2 sur le trajet des plaquettes 42 des éléments de maintien 33 pour provoquer, lors de la rotation des plates-formes, le mouvement des élément de maintien 33 entre leurs positions ouverte et fermée. Chaque galet d'actionnement 43 est monté pour rencontrer les plaquettes 42 de manière à faire pivoter les tourillons 40. Le pivotement de chaque tourillon 40 provoque le déplacement du doigt 39 selon une trajectoire en arc de cercle propre à faire pivoter l'élément de maintien 33 autour de l'axe d'articulation 34 d'une de ses positions vers l'autre.

Des galets d'actionnement 43.1 et 43.2 sont visibles sur la figure 7.

Le galet d'actionnement 43.1 est ainsi disposé au-dessus de la plate-forme amont 4.1 sensiblement au niveau du point de tangence des plates-formes 4 pour amener les éléments de maintien 33 solidaires de la plate-forme amont 4.1 de leur position fermée vers leur position ouverte au niveau du point de tangence tandis que le galet d'actionnement 43.2 est disposé au-dessus de la plate-forme aval 4.2 légèrement en aval de ce point de tangence par rapport aux sens de rotation respectifs de ces plates-formes pour amener les éléments de maintien 33 solidaires de la plate-forme aval 4.2 de leur position ouverte vers leur position fermée.

Un autre galet d'actionnement 43 non visible est disposé au-dessus de la plate-forme amont 4.1 pour amener les éléments de maintien 33 solidaires de la plate-forme amont 4.1 de leur position ouverte vers leur position fermée et un autre galet d'actionnement 43 non visible est disposé au-dessus de la plate-forme aval 4.2 pour amener les éléments de maintien 33 solidaires de la plate-forme aval 4.2 de leur position fermée vers leur position ouverte.

Le transfert d'un récipient 1 de la plate-forme amont 4.1 vers la plate-forme aval 4.2 va maintenant être décrit.

Le goulot 2 du récipient 1 est reçu dans une échancrure 7 de la plate-forme amont 4.1 et la surface d'appui 31 de la collerette 3 repose sur la butée 11. L'élément de maintien 33 en position fermée exerce sur le goulot 2 au-dessus de la collerette 3, par l'intermédiaire de la face 37 du mors 35, un effort en direction d'une portion opposée du bord de l'échancrure 7. Il est ainsi appliqué une pression latérale sur le goulot 2 qui tend à maintenir le goulot 2 en appui contre le bord de l'échancrure 7 et par là-même à maintenir la face d'appui 31 de la collerette 3 en position sur la butée 11.

Les mouvements de rotation des plates-formes 4 sont synchronisés de telle manière que l'échancrure 7 de la plate-forme amont 4.1 qui reçoit le récipient 1 arrive en regard d'une échancrure 7 correspondante vide de la plate-forme aval 4.2 au niveau du point de tangence des plates-formes 4.

Au point de tangence, le goulot 2 du récipient 1 est reçu dans les deux échancrures 7 en regard et la collerette 3 du récipient 1 est pincée par les pinces de préhension 32 en regard.

Au cours du mouvement de rotation, au niveau de la pince de préhension 32 de la plate-forme amont 4.1, la plaquette 42 de l'élément de maintien 33 rencontre le galet d'actionnement 43.1 qui amène l'élément de maintien 33 dans sa position ouverte et libère le goulot 2. Au niveau de la pince de préhension 32 correspondant de la plate-forme aval 4.2, la plaquette 42 rencontre le galet d'actionnement 43.2 qui amène l'élément de maintien 33 dans sa position fermée dans laquelle le mors 35 est rapproché du bord de l'échancrure 7 pour emprisonner le goulot 2 du récipient 1 porté par la plate-forme amont 4.1. Le récipient 1 est alors maintenu dans la pince de préhension 32 de la plate-forme aval 4.2 par l'élément de maintien 33 en position fermée.

La rotation se poursuivant, le récipient 1 quitte la plate-forme amont 4.1 et n'est plus alors supporté que par la plate-forme aval 4.2.

Bien entendu, l'invention n'est pas limitée aux modes de réalisation décrits et on peut y apporter des variantes de réalisation sans sortir du cadre de l'invention tel que défini par les revendications.

En particulier, l'invention n'est pas limitée à l'application décrite et peut être notamment utilisée dans tout appareil de transport de récipient.

Un dispositif de préhension conforme à l'invention peut également être obtenu par inversion cinématique des structures décrites ci-dessus et plus particulièrement de celle du premier mode de réalisation. On notera alors que, dans le cas où la dent marque la collerette 3, cette marque se trouve alors sous la collerette 3 au niveau de sa face d'appui et n'est donc pas visible.

D'autres moyens d'actionnement de la pince de préhension sont envisageables, comme des moyens pneumatiques ou hydrauliques, des cames...

En outre, l'échancrure peut avoir d'autres formes que celles décrites, en particulier une forme triangulaire pour former un vé de positionnement, ou bien encore le bord de la plaque dont une face supérieure forme la butée peut être dépourvu d'échancrure.

Les pinces de préhension selon le premier mode de réalisation peuvent également être disposées sur les plates-formes de manière à pincer la partie amont de la collerette par rapport au sens de rotation ou la partie aval de celle-ci. D'une manière générale et quel que soit le mode de réalisation, les pinces de préhension peuvent être montées différemment sur les plates-formes, par exemple en porte-à-faux.

Bien que la butée 11 soit ici formée par la partie de la surface supérieure 8 de la plaque 6 qui est adjacente à l'échancrure 7 correspondante, la butée 11 peut être réalisée différemment et notamment être rapportée sur la plaque 6.

Le mors et/ou la butée peuvent en outre être lisses ou présenter des stries pour améliorer l'agrippement de la collerette.

Par ailleurs, dans certaines installations, il est possible d'utiliser une plate-forme équipée de pinces selon le deuxième mode de réalisation et une deuxième plate-forme équipée elle de pinces selon le troisième mode de réalisation par exemple, ou le premier mode de réalisation.

Bien que dans les modes de réalisation décrits, la pince soit commandée entre ses positions ouverte et fermée par l'intermédiaire de moyens positifs d'actionnement (galet 18 et portion d'actionnement 14 ; galet 28 et montant 24 ; galet 43 et doigt excentrique 39), la pince peut être maintenue fermée par un ressort de telle manière que les récipients soient introduits en force entre les mâchoires et/ou extraits en force des mâchoires. Les moyens d'actionnement peuvent également avoir une structure différente. L'élément de maintien peut par exemple être associé à un galet roulant sur une surface de came fixe par rapport au bâti 5.

## Revendications

1. Pince de préhension de récipients comprenant un corps et un goulot ayant une collerette en saillie présentant une face d'appui sensiblement radiale du côté du corps, la pince comportant une première mâchoire (11) et une deuxième mâchoire (22, 33), **caractérisée en ce que** la première mâchoire comprend un organe support (6) ayant une face sensiblement horizontale formant une butée (11) de collerette et comprenant une échancrure (7) débouchant latéralement pour recevoir une portion du goulot adjacente à la collerette, et **en ce que** la deuxième mâchoire comprend un élément de maintien (22, 33) qui est monté par rapport à l'organe support (6) pour pivoter autour d'un axe d'articulation (29) sensiblement perpendiculaire à la face de butée (11) et comporte une extrémité (23, 35) adjacente à l'échancrure (7) pour exercer une pression sur une zone du goulot s'étendant au voisinage de la face d'appui du côté de celle-ci opposé au corps de manière à maintenir la collerette en position contre la butée (11).

2. Pince de préhension selon la revendication 1, **caractérisée en ce que** l'extrémité (23) de l'élément de maintien (22) adjacente à l'échancrure (7) est agencée pour prendre appui latéralement sur la collerette de manière à maintenir le goulot dans l'échancrure.

3. Pince de préhension selon la revendication 1, **caractérisée en ce que** l'extrémité (35) de l'élément de maintien (33) est espacée par rapport à l'organe support (6) pour prendre appui latéralement sur le goulot au-dessus de la collerette de manière à maintenir le goulot dans l'échancrure.

4. Pince de préhension selon l'une quelconque des revendications 1 à 3, **caractérisée en ce qu'**elle comprend un ressort (17) intercalé entre une armature (27) et l'élément de maintien (22) pour appliquer l'élément de maintien contre la zone du goulot s'étendant au voisinage de la face d'appui du côté de celle-ci opposé au corps.

5. Appareil de transport de récipients comprenant un corps et un goulot ayant une collerette en saillie présentant une face d'appui sensiblement radiale du côté du corps, l'appareil comprenant une plate-forme amont (4.1) rotative, une plate-forme aval (4.2) rotative tangente à la plate-forme amont et des pinces de préhension de récipient respectivement solidaires de la plate-forme amont et de la plate-forme aval, chaque pince comportant une première mâchoire (11) et une deuxième mâchoire (22, 33), **caractérisé en ce que** la première mâchoire comprend un organe support (6) ayant une face sensiblement horizontale formant une butée de collerette (11) et comprenant une échancrure (7) débouchant latéralement pour recevoir une portion du goulot adjacente à la collerette, et la deuxième mâchoire comprend un élément de maintien (22, 33) monté par rapport à l'organe support (6) pour pivoter autour d'un axe d'articulation (29) sensiblement perpendiculaire à la face de butée (11) entre une position fermée de préhension et une position ouverte, et **en ce que** les plates-formes (4.1, 4.2) sont synchronisées de telle manière que chaque échancrure (7) de la plate-forme amont (4.1) arrive en regard d'une échancrure (7) correspondante de la plate-forme aval (4.2) au niveau du point de tangence des plates-formes (4), les éléments de maintien étant positionnés pour que, lorsque la pince est en position fermée, les éléments de maintien exercent une pression sur des zones opposées du goulot d'un récipient reçu dans les échancrures en regard, les zones s'étendant au voisinage de la face d'appui du côté de celle-ci opposé au corps et
l'élément de maintien exerçant une pression sur le goulot de manière à maintenir la collerette en position contre la butée (11).

6. Appareil selon la revendication 5, **caractérisé en ce que** l'élément de maintien (22) comporte une extrémité (23) adjacente à l'échancrure (7) pour prendre appui latéralement sur la collerette de manière à maintenir le goulot dans l'échancrure.

7. Appareil selon la revendication 5, **caractérisé en ce que** l'élément de maintien (33) comporte une extrémité (35) espacée par rapport à l'organe support et adjacente à l'échancrure (7) pour prendre appui latéralement sur le goulot au-dessus de la collerette de manière à maintenir le goulot dans l'échancrure.

8. Appareil selon la revendication 5, **caractérisé en ce qu'**il comprend un ressort (26) intercalé entre une armature (27) et l'élément de maintien (22) pour appliquer l'élément de maintien contre la zone du goulot s'étendant au voisinage de la face d'appui du côté de celle-ci opposé au corps.

## Claims

1. A clamp for gripping receptacles, comprising a body and a neck having a projecting collar presenting a substantially radial bearing face beside the body, the clamp comprising a first jaw (11) and a second jaw (12, 22, 33), and being **characterized in that** the first jaw comprises a support member (6) having a substantially horizontal face forming a collar abutment (11) and comprising a laterally-open notch (7) to receive a portion of the neck adjacent to the collar, and **in that** the second jaw comprises a holding element (22, 33) which is mounted relative to the support member (6) to pivot about a hinge pin (29) substantially perpendicular to the face of the abutment (11) and which has an end (23) adjacent to the notch to exert pressure on a zone of the neck that extends in the vicinity of the bearing face on its side facing away from the body in such a manner as to hold the collar in position against the abutment (11).

2. A clamp according to claim 1, **characterized in that** the end (23) of the holding element (22) adjacent to the notch (7) is arranged to bear laterally against the collar in such a manner as to hold the neck in the notch.

3. A gripping clamp according to claim 1, **characterized in that** the end (35) of holding element (33) is spaced apart from the support member and adjacent to the notch (7) to bear laterally against the neck above the collar so as to hold the neck in the notch.

4. A gripping clamp according to any one of claims 1 to 3, **characterized in that** it includes a spring (26) inserted between a structural member (27) and the holding element (12, 22) to urge the holding element against the zone of the neck that extends in the vicinity of the bearing face, on its side facing away from the body.

5. A transporter for receptacles comprising a body and a neck having a projecting collar presenting a substantially radial bearing face beside the body, said transporter comprising an upstream rotating platform (4.1), a downstream rotating platform (4.2) tangential to the upstream rotating platform and gripping clamps respectively fixed with respect to the upstream rotating platform and with respect to the downstream rotating platform, each gripping clamp comprising a first jaw (11) and a second jaw (22, 23), **characterized in that** the first jaw comprises a support member (6) having a laterally-open notch to receive a receptacle neck portion extending below the collar and a substantially horizontal face forming a collar abutment and a second jaw comprising a holding element (22, 23) hinged on the support to pivot about a hinge pin which is substantially perpendicular to the face of the abutment between a closed gripping position and an open position, and **in that** the platform are synchronized in such a manner that at a tangent point between the platforms a notch of a support member fixed with respect to the upstream rotating platform comes into register with a notch of a support member of the downstream rotating platform in order to transfer a receptacle from the upstream rotating platform to the downstream rotating platform, the holding elements being positioned so that in the closed gripping position, the holding elements bear against opposite sides of the neck of the receptacle received in the notches in register, the zones of the neck extending above the bearing face and in the vicinity of the bearing face, the holding element exerting pressure on the neck in such a manner as to hold the collar in position against the abutment.

6. A transporter according to claim 5, **characterized in that** the holding element (22) has an end (23) adjacent to the notch (7) to bear laterally against the collar in such a manner as to hold the neck in the notch.

7. A transporter according to claim 5, **characterized in that** holding element (33) has an end (35) spaced apart from the support member and adjacent to the notch (7) to bear laterally against the neck above the collar so as to hold the neck in the notch.

8. A transporter according to claim 5, **characterized in that** it includes a spring (26) inserted between the support member (22) and a structural member (27) to urge the holding element against the zone of the neck extending above the bearing face and in the vicinity of the bearing face.

## Patentansprüche

1. Greifer für Behälter, die einen Körper und einen Hals umfassen, der einen vorspringenden Kragen hat, der auf der Seite des Körpers eine im Wesentlichen radiale Anlagefläche aufweist, wobei der Greifer eine erste Spannbacke (11) und eine zweite Spannbacke (22, 33) umfasst, **dadurch gekennzeichnet, dass** die erste Spannbacke ein Stützelement (6) umfasst, das eine im Wesentlichen horizontale Fläche hat, die einen Anschlag (11) für den Kragen bildet und einen Ausschnitt (7) umfasst, der seitlich offen ist, um einen an den Kragen angrenzenden Abschnitt des Halses aufzunehmen, und dass die zweite Spannbacke ein Halteelement (22, 33) umfasst, das in Bezug auf das Stützelement (6) derart gelagert ist, dass es sich um eine Gelenkverbindungsachse (29) drehen kann, die im Wesentlichen senkrecht zur Anlagefläche (11) ist, und ein an den Ausschnitt (7) angrenzendes Ende (23, 35) hat, das dazu bestimmt ist, einen Druck auf einen Bereich des Halses auszuüben, der sich nahe der Anlagefläche auf der dem Körper abgewandten Seite derselben erstreckt, derart, dass der Kragen am Anschlag (11) in Position gehalten wird.

2. Greifer nach Anspruch 1, **dadurch gekennzeichnet, dass** das Ende (23) des Halteelements (22), das an den Ausschnitt (7) angrenzt, derart ausgebildet ist, dass es seitlich an dem Kragen zur Anlage kommt, derart, dass der Hals in dem Ausschnitt gehalten wird.

3. Greifer nach Anspruch 1, **dadurch gekennzeichnet, dass** das Ende (35) des Halteelements (33) in Bezug auf das Stützelement (6) beabstandet ist, um seitlich an dem Hals über dem Kragen zur Anlage zu kommen, derart, dass der Hals in dem Ausschnitt gehalten wird.

4. Greifer nach einem der Ansprüche 1 bis 3, **dadurch gekennzeichnet, dass** er eine Feder (17) umfasst, die zwischen einem Anker (27) und dem Halteelement (22) eingefügt ist, um das Halteelement gegen den Bereich des Halses zu drücken, der sich nahe der Anlagefläche auf der dem Körper abgewandten Seite derselben erstreckt.

5. Transportvorrichtung für Behälter, die einen Körper und einen Hals umfassen, der einen vorspringenden Kragen hat, der auf der Seite des Körpers eine im Wesentlichen radiale Anlagefläche aufweist, wobei die Vorrichtung eine stromaufwärtige Drehplattform (4.1), eine stromabwärtige Drehplattform (4.2), die die stromaufwärtige Plattform tangiert, und Greifer für Behälter umfasst, die jeweils fest mit der stromaufwärtigen und der stromabwärtigen Plattform verbunden sind, wobei jeder Greifer eine erste Spannbacke (11) und eine zweite Spannbacke (22, 33) umfasst, **dadurch gekennzeichnet, dass** die erste Spannbacke ein Stützelement (6) umfasst, das eine im Wesentlichen horizontale Fläche hat, die einen Anschlag (11) für den Kragen bildet, und einen Ausschnitt (7) hat, der seitlich offen ist, um einen Abschnitt des Halses, der an den Kragen angrenzt, aufzunehmen, und die zweite Spannbacke ein Halteelement (22, 33) umfasst, das in Bezug auf das Stützelement (6) derart gelagert ist, dass es sich um eine Gelenkverbindungsachse (29), die im Wesentlichen senkrecht zur Anlagefläche (11) ist, zwischen einer geschlossenen Greifstellung und einer offenen Stellung drehen kann, und dass die Plattformen (4.1, 4.2) derart synchronisiert sind, dass jeder Ausschnitt (7) der stromaufwärtigen Plattform (4.1) gegenüber einem entsprechenden Ausschnitt (7) der stromabwärtigen Plattform (4.2) im Bereich des Tangentialpunktes der Plattformen (4) ankommt, wobei die Halteelemente so positioniert sind, dass sie, wenn der Greifer in der geschlossenen Stellung ist, einen Druck auf die einander abgewandten Bereiche des Halses eines Behälters ausüben, der in den gegenüberliegenden Ausschnitten aufgenommen ist, wobei sich die Bereiche nahe der Anlagefläche auf der dem Körper abgewandten Seite derselben erstrecken, und wobei das Halteelement einen Druck auf den Hals ausübt, derart, dass der Kragen an dem Anschlag (11) in Position gehalten wird.

6. Vorrichtung nach Anspruch 5, **dadurch gekennzeichnet, dass** das Halteelement (22) ein an den Ausschnitt (7) angrenzendes Ende (23) umfasst, das dazu bestimmt ist, seitlich an dem Kragen zur Anlage zu kommen, derart, dass der Hals in dem Ausschnitt gehalten wird.

7. Vorrichtung nach Anspruch 5, **dadurch gekennzeichnet, dass** das Halteelement (33) ein Ende (35) umfasst, das in Bezug auf das Stützelement beabstandet ist, an den Ausschnitt (7) angrenzt und dazu bestimmt ist, seitlich an dem Hals über dem Kragen zur Anlage zu kommen, derart, dass der Hals in dem Ausschnitt gehalten wird.

8. Vorrichtung nach Anspruch 5, **dadurch gekennzeichnet, dass** sie eine Feder (26) umfasst, die zwischen einem Anker (27) und dem Halteelement (22) eingefügt ist, um das Halteelement an den Bereich des Halses zu drücken, der sich nahe der Anlagefläche auf der dem Körper abgewandten Seite derselben erstreckt.
